# EUROPÄISCHE PATENTSCHRIFT

(11) **EP 3 064 259 B1**
(45) Veröffentlichungstag und Bekanntmachung des Hinweises auf die Patenterteilung: **14.06.2017**
(21) Anmeldenummer: 15157346.6
(22) Anmeldetag: 03.03.2015
(51) Int. Cl.: B04B 1/02, B04B 5/10, B04B 11/06, B01D 11/04, B01F 7/00, B04B 7/08

(54) **ZENTRIFUGE UND TRENNVERFAHREN**
CENTRIFUGE AND METHOD OF SEPARATION
CENTRIFUGEUSE ET PROCÉDÉ DE SÉPARATION

(43) Veröffentlichungstag der Anmeldung: 07.09.2016
(73) Patentinhaber: CINC Deutschland GmbH & Co. KG, 33034 Brakel (DE)
(72) Erfinder: Vornefeld, Mathias, 33034 Brakel (DE)
(74) Vertreter: Ostermann, Thomas

(56) Entgegenhaltungen:
- WO-A1-2009/145954
- US-A1- 2010 008 835
- US-A1- 2010 175 311

## Beschreibung

Die Erfindung betrifft eine Zentrifuge nach dem Oberbegriff des Patentanspruchs 1.

Ferner betrifft die Erfindung ein Verfahren zum Mischen und Trennen von einem ersten Fluid und einem zweiten Fluid, wobei die beiden Fluide in eine Mischkammer und danach in eine Trennkammer geleitet werden.

Aus der EP 1 923 113 A1 ist eine gattungsgemäße Zentrifuge bekannt, die zum Mischen und Trennen von Fluiden eingesetzt wird. Die Zentrifuge weist ein Gehäuse auf, in dem eine Mischkammer und eine Trennkammer koaxial zueinander angeordnet sind. Die Trennkammer wird begrenzt durch einen zylinderförmigen Rotor, der mittels einer axialen Antriebswelle antreibbar ist. Die Mischkammer ist als eine Ringkammer ausgebildet, die sich in Umfangsrichtung um die Trennkammer erstreckt. Aufgrund dieser Bauart ermöglicht die Mischkammer die Vermischung von zwei Fluiden nur für wenige Sekunden. Bei Misch-/Trennprozessen von Fluiden mit gehemmten Stofftransport wäre die Mischung in der Mischkammer zeitlich nicht lang genug.

Aus der WO 2009/145954 A1 ist eine Zentrifuge mit einer Trennkammer und seitlich die Trennkammer umgebenden Zuführkanälen zum Mischen von Fluiden bekannt, so dass sie ein relativ großen seitlichen Platzbedarf benötigt. Es liegt ein relativ ausladender Aufbau der Zentrifuge vor.

Aus der US 2010/0008835 A1 ist eine Zentrifuge mit einer Trennkammer und ringförmigen Zuführkanälen bekannt. Die Zentrifuge weist keine Zusatzkammer auf.

Aus der US 2010/0175311 A1 sind Kanäle zum Mischen der Fluide in radialer Richtung zu der Trennkammer bekannt.

Aufgabe der vorliegenden Erfindung ist es daher, eine Zentrifuge bzw. ein Verfahren zum Mischen und Trennen von Fluiden anzugeben, dass platzsparend Fluide intensiv lang gemischt und anschließend exakt getrennt werden können, wobei insbesondere auch stofftransportgehemmte Misch-/Trennprozesse ermöglicht werden.

Zur Lösung dieser Aufgabe weist die Erfindung die Merkmale des Patentanspruchs 1 auf.

Nach der Erfindung schließt sich an die Mischkammer eine Zusatzmischkammer an, dessen Volumen variabel auf die Prozessbedürfnisse des Anwenders angepasst werden kann. Durch einen Zuführkanal wird das gemischte Fluid der Trennkammer zugeführt. Der Zuführkanal ist von der Zusatzmsichkammer umgeben und weist an einem der Trennkammer abgewandten Ende einen Einlass für den Eintritt eines gemischten Fluides auf. Vorteilhaft kann hierdurch eine platzsparende, intensive und zeitlich variable Mischung und Trennung von zwei Fluiden stattfinden. Die Fluidströmung ist so geführt, dass es zu keiner Kurzschlussströmung kommen kann. Die Zusatzmischkammer ermöglicht eine Erhöhung der Verweilzeit beim Prozessabschnitt Mischen. Der Zuführkanal ermöglicht eine gezielte und homogene Zuführung des gemischten Fluids in die Trennkammer. Die Fluide werden in zwei entgegengesetzte Richtungen geführt, wobei in einer ersten Richtung die Mischung des ersten und zweiten Fluids miteinander erfolgt und in der zweiten entgegengesetzten Richtung im Wesentlichen das Trennen des gemischten Fluids in ein leichtes getrenntes und zweites schweres Fluid erfolgt. Sowohl Fluide mit einer geringen als auch mit einer großen Neigung zum Vermischen können verarbeitet werden.

Nach einer Weiterbildung der Erfindung ist die Mischkammer im Querschnitt kreisringförmig mit einer vorzugsweise konstanten Kammerbreite ausgebildet, während die Zusatzmischkammer in axialer Richtung und in radialer Richtung unterschiedliche Kammerhöhen und Kammerbreiten aufweisen kann. Auf diese Weise kann platzsparend bei optimaler Mischzeit eine intensive Durchmischung der Fluide erfolgen.

Nach einer Weiterbildung der Erfindung ist die Zusatzmischkammer variabel ausgebildet. Die Zusatzmischkammer kann wahlweise in unterschiedlichen Volumina bereitgestellt werden und über Befestigungsmittel an einem feststehenden Gehäuse der Mischkammer angesetzt werden. Vorzugsweise schließt sich die Zusatzmischkammer unmittelbar an dem Gehäuse der Mischkammer an.

Nach einer Weiterbildung der Erfindung ist der Einlass des Zuführkanals als ein Ringspalt ausgebildet, der axial versetzt zu dem Ringspalt des Eingangs der Trennkammer verläuft. Vorteilhaft kann hierdurch eine gezielte und homogene Strömung des vermischten Fluids in Richtung des Zuführkanals erfolgen. Der Zuführkanal ist fest mit dem Rotor verbunden und ist somit rotierbar ausgeführt. Vorteilhaft kann der drehende Zuführkanal in der Zusatzmischkammer mischen und die aufsteigende gemischte Phase homogen der Trennkammer zuführen.

Nach einer Weiterbildung der Erfindung ist der Zuführkanal fest mit dem Gehäuse der Mischkammer verbunden. Der Zuführkanal ist somit feststehend ausgebildet. Vorteilhaft entstehen hierdurch weniger Schwingungen. Vorteilhaft kann hierbei auf ein unteres Lager verzichtet werden.

Nach einer Weiterbildung der Erfindung ist der Rotor der Zentrifuge über ein unteres und ein oberes Lager oder über lediglich zwei obere Lager gelagert.

Zur Lösung der Aufgabe weist das erfindungsgemäße Verfahren die Merkmale des Patentanspruchs 11 auf.

Der besondere Vorteil des erfindungsgemäßen Verfahrens besteht darin, dass durch eine Zusatzmischkammer ein variabel großer Reaktionsraum / Mischraum geschaffen wird, in dem sich die Mischzeit von wenigen Sekunden bis auf mehrere Minuten ausweiten lässt. Es erfolgt eine intensive Durchmischung der Fluide in einem Raum zwischen einem Zuführkanal und einer feststehenden Wandung der Zusatzmischkammer. Es wird hierdurch ein effektives Mischen und Trennen bzw. Extrahieren von Stoffen aus einem Fluid ermöglicht.

Nach einer Weiterbildung der Erfindung wird das erste und zweite Fluid in mehreren Zentrifugen nacheinander gemischt und getrennt. Vorteilhaft kann hierdurch platzsparend ein erhöhter Extraktionsgrad von Stoffen aus einem Fluid erzielt werden.

Ausführungsbeispiele der Erfindung werden nachfolgend anhand einer Zeichnung näher erläutert:

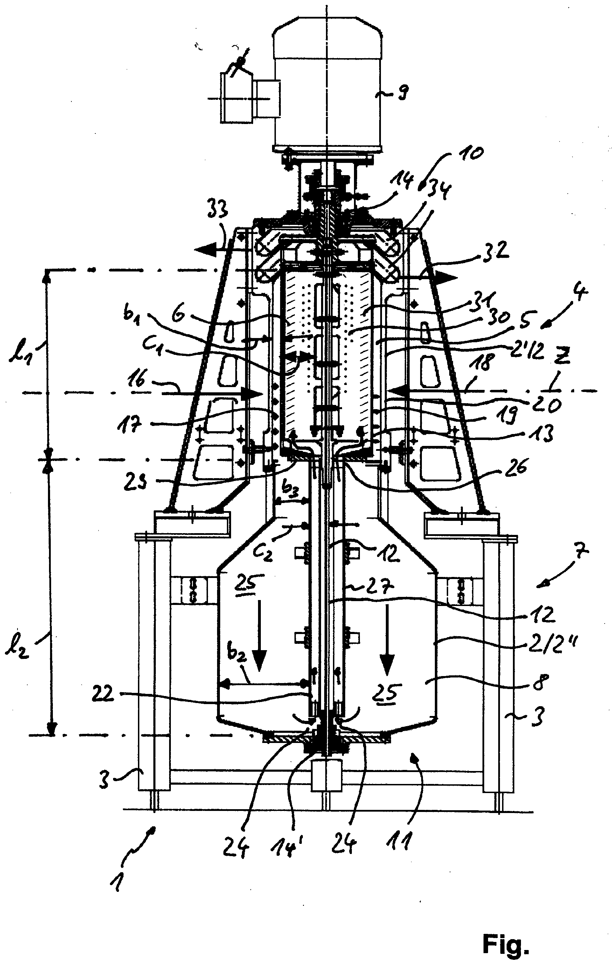

Die Zeichnung zeigt:
- Figur: einen Vertikalschnitt durch eine Zentrifuge mit einem doppelt gelagerten Rotor, wobei unterhalb einer Trennkammer eine Zusatzmischkammer angeordnet ist.

Eine Zentrifuge 1 ist als eine Zentrifuge für flüssig-flüssig Misch- und Trennaufgaben ausgebildet, wobei insbesondere ein gesuchter Wert- oder Störstoff aus einem Fluid extrahiert werden soll.

Die Zentrifuge 1 weist ein zylinderförmiges Gehäuse 2 auf, das aufrecht über verteilt in Umfangsrichtung angeordnete Füße 3 aufrecht gelagert ist. Das Gehäuse 2 umfasst in einem oberen Bereich 4 desselben im Wesentlichen eine Mischkammer 5 und eine Trennkammer 6. In einem unteren Bereich 7 des Gehäuses 2 ist im Wesentlichen eine Zusatzmischkammer 8 angeordnet. Koaxial zu dem Gehäuse 2 ist ein Antrieb 9 vorgesehen, der über eine Kupplung eine sich von einer oberen Stirnseite 10 bis zu einer unteren Stirnseite 11 des Gehäuses 2 verlaufende Rotorwelle 12 eines Rotors 13 antreibt. Die Rotorwelle 12 ist über ein oberes Lager 14 und ein unteres Lager 14' an den gegenüberliegenden Stirnseiten 10, 11 drehbar gelagert. Die Rotorwelle 12 ist drehfest mit einem Rotor 13 verbunden, der zylinderförmig ausgebildet ist und die Trennkammer 6 radial nach außen hin begrenzt.

In einer horizontalen Zulaufebene Z, die sich im Bereich einer Quermittelebene des Rotors 13 erstreckt, sind an gegenüberliegenden Seiten des Gehäuses 2 ein erster Einlass 16 zum Eintritt eines ersten Fluids 17 (leichtes Fluid) in die Mischkammer 5 und ein zweiter Einlass 18 für den Eintritt eines zweiten Fluids 19 (schweres Fluid) in die Mischkammer 5 vorgesehen. Der erste Einlass 16 und der zweite Einlass 18 sind in der Figur schematisch durch einen Pfeil dargestellt. Vorzugsweise erfolgt der Zulauf des ersten Fluids 17 und des zweiten Fluids 19 mittels an entsprechenden Öffnungen des Gehäuses 2 angesetzten flexiblen Verbindungen, durch die das erste Fluid 17 bzw. das zweite Fluid 19 mittels einer nicht dargestellten Pumpe oder im freien Gefälle zugeführt werden.

Das erste Fluid 17 und das zweite Fluid 19 können aus einem einzigen Stoff oder mehreren Stoffen bestehen. Beispielsweise kann das erste Fluid 17 aus einem Lösungsmittel bestehen. Beispielsweise kann das zweite Fluid 19 aus einer Geberphase und einem Wertstoff bestehen, der von der Geberphase getrennt und beispielsweise zusammen mit dem Lösungsmittel als leichtes getrennte Fluid 30 über einen ersten Auslass 32 abgeführt wird. Die Geberphase 19 wird nach dem Misch- und Trennvorgang dann als schweres getrennte Fluid 31 ohne den Wertstoff an einem zweiten Auslass 33 des Gehäuses abgeführt.

Nach einer nicht dargestellten alternativen Ausführungsform können das erste Fluid 17 und das zweite Fluid 19 auch über einen einzigen Eingang in das Gehäuse 2 der Zentrifuge 1 eingeleitet werden.

Durch Rotation des Rotors 13 werden das erste Fluid 17 und das zweite Fluid 19 in der Mischkammer 5 vermischt, wobei die Fluide 17, 19 jeweils in vertikaler Richtung nach unten strömen. Die Mischkammer 5 ist im Querschnitt kreisförmig ausgebildet und wird im Wesentlichen durch eine Wandung 20 eines oberen Gehäuseteils 2' des Gehäuses 2 einerseits und dem Rotor 13 andererseits begrenzt. Die Mischkammer 5 weist eine Kammerbreite b₁ auf, die durch den Abstand zwischen der Wandung 20 des oberen Gehäuseteils 2' und dem Rotor 13 vorgegeben wird. In vertikaler Richtung unterhalb der Mischkammer 5 schließt sich die Zusatzmischkammer 8 an, die durch eine Wandung 21 eines unteren Gehäuseteils 2" des Gehäuses 2 und einem Zuführkanal 22 begrenzt ist. Der Zuführkanal 22 ist fest mit dem Rotor 13 verbunden. Der Zuführkanal 22 weist einen kleineren Radius c₂ auf als ein Radius c₁ des Rotors 13.

In einem unteren Abschnitt der Zusatzmischkammer 8 ist die Kammerbreite b₂ größer als die Kammerbreite b₁ der Mischkammer 5, vorzugsweise ist die Kammerbreite b₂ im unteren Abschnitt der Zusatzmischkammer 8 mindestens doppelt so groß wie die Kammerbreite b₁ der Mischkammer 5. Das untere Gehäuseteil 2", das die Zusatzmischkammer 8 umgibt, ist vorzugsweise kreisförmig ausgebildet, wobei eine Kammerbreite b₃ in einem oberen Abschnitt des unteren Gehäuseteils 2" kleiner ist als die Kammerbreite b₂ im unteren Abschnitt des Gehäuseteils 2" einerseits und größer oder gleich ist als die Kammerbreite b₁ der Mischkammer 5 im oberen Gehäuseteil 2'.

Die Zusatzmischkammer 8 weist vorzugsweise ein so großes Volumen auf, dass eine vollständige Durchmischung über die benötigte Mischzeit des ersten Fluids 17 und des zweiten Fluids 19 ermöglicht wird. Der Zuführkanal 22 ist in axialer Verlängerung zu dem Rotor 13 bzw. zu der Trennkammer 6 angeordnet und erstreckt sich im unteren Gehäuseteil 2" des Gehäuses 2. An einem der Trennkammer 6 abgewandten Ende 23 weist der Zuführkanal 22 einen Einlass 24 für den Eintritt des aus der Zusatzmischkammer 8 strömenden gemischten Fluids 25 in den Zuführkanal 22 auf. Der Einlass 24 des Zuführkanals 22 ist axial versetzt am Einlass der Trennkammer 6 ausgebildet. Der Zuführkanal 22 wird begrenzt durch eine fest mit dem Rotor 13 verbundenen Rotorverlängerung 27 und der Rotorwelle 12. Der Zuführkanal 22 ist als ein Ringkanal ausgebildet, dessen radiale Breite c₂ kleiner ist als eine radiale Breite c₁ der Trennkammer 6. Der untere Gehäuseteil 2" ist fest mit dem oberen Gehäuseteil 2' verbunden. Alternativ kann das Gehäuse 2 auch einstückig ausgebildet sein.

Die Zusatzmischkammer 8 weist ein Fassungsvermögen im Bereich von 0,01 l bis 4000 l auf.

Eine axiale Länge l₂ der Zusatzmischkammer 8 bzw. des Zuführkanals 22 ist mindestens halb so groß wie eine axiale Länge l₁ der Mischkammer 5 bzw. der Trennkammer 6.

Das im unteren Bereich des Zuführkanals 22 eingetretene gemischte Fluid 25 strömt in vertikaler Richtung nach oben zu dem Einlass der Trennkammer 6. Das gemischte Fluid 25 strömt somit in axialer Richtung in die Trennkammer 6 ein, in der es aufgrund der Rotation des Rotors 13 in vertikaler Richtung nach oben mehr und mehr getrennt wird zu einem leichten getrennten Fluid 30 (punktförmig gezeichnet) und einem schweren getrennten Fluid 31 (ab Striche gezeichnet). Das leichte getrennte Fluid 30 wird dann über den ersten Auslass 32 des Gehäuses 2 und das schwere getrennte Fluid 31 über den zweiten Auslass 33 des Gehäuses 2, die in einer Ablaufebene A angeordnet sind, druckfrei nach außen abgegeben. In der Figur sind ringförmige Leitungen 34 für den Austritt der Fluide 30, 31 dargestellt. Der erste Auslass 32 und der zweite Auslass 33 sind schematisch mittels eines Pfeils gekennzeichnet.

Die Zentrifugalextraktion der Zentrifuge 1 läuft folgendermaßen ab. In der Zulaufebene Z wird ein erstes Fluid 17 und ein zweites Fluid 19 durch den ersten Einlass 16 bzw. den zweiten Einlass 18 in die Mischkammer 5 unter Druck oder drucklos eingeleitet. Die Durchflussrate des ersten Fluids 17 und des zweiten Fluids 19 kann in einem Bereich von 0,01 l/min bis 700 l/min betragen.

In der Mischkammer 5 und in der sich an derselben anschließenden Zusatzmischkammer 8 erfolgt die Durchmischung des ersten Fluids 17 und des zweiten Fluids 19 zu dem gemischten Fluid 25, wobei der Rotor in einem Bereich von 600 U/min bis 6.000 U/min betrieben wird. Die Mischzeit in der Mischkammer 5 liegt vorzugsweise im Bereich zwischen 5 Sekunden und 1.000 Sekunden Das gemischte Fluid 25 tritt im unteren Bereich 7 des Gehäuses 2 durch den Einlass 24 des Zuführkanals 22 in denselben ein und wird durch denselben in vertikaler Richtung nach oben in die Trennkammer 6 geleitet, in der das gemischte Fluid 25 aufgetrennt wird zu dem ersten getrennten Fluid 30 und dem zweiten getrennten Fluid 31, die jeweils über den ersten Auslass 32 bzw. zweiten Auslass 33 abgeleitet werden. Ist der Extraktionsgrad nicht ausreichend, kann an der Zentrifuge 1 eine weitere oder mehrere Zentrifugen nachgelagert sein, so dass eine Gegenstrom- oder Kreuzstrom Extraktion durchgeführt wird.

Gemäß einem ersten Beispiel der Erfindung kann die Zentrifuge 1 zum Mischen und Trennen von Fluiden genutzt werden, die auch durch die in der EP 1 923 113 A1 offenbarte Zentrifuge ohne Zusatzmischkammer ermöglicht wird. Das erste Fluid 17 und das zweite Fluid 19 können hierbei beispielsweise bei einer Umdrehung des Rotors 13 von 4500 U/min für 5 Sekunden gemischt werden, um danach in der Trennkammer 6 getrennt zu werden. Das erste Fluid 17 wird entsprechend einer Durchflussmenge von 280 ml/min und das zweite Fluid 19 mittels einer Durchflussmenge von 160 ml/min der Mischkammer 5 zur Verfügung gestellt.

Nach einem zweiten Beispiel der Erfindung wird das erste Fluid 17 mit einer Durchlassmenge von 280 ml/min und das zweite Fluid 19 mit einer Durchflussmenge von 160 ml/min der Mischkammer 5 bereitgestellt. Es erfolgt eine intensive Durchmischung der beiden Fluide 17, 19 bei einer Umdrehung des Rotors 13 von 4500 U/min für eine Dauer von 190 Sekunden. Das Aufnahmevolumen der Mischkammer 5 und der Zusatzmischkammer 8 beträgt hierbei ca. 1.400 ml.

Nach einem dritten Beispiel der Erfindung sind drei Zentrifugen 1 in Reihe geschaltet angeordnet, wobei das den zu extrahierenden Stoff enthaltene erste Fluid 17 (Lösungsmittel) in allen drei Zentrifugen durchmischt und getrennt wird. Die Mischkammer 5 und die Zusatzmischkammer 8 weisen ein Fassungsvolumen von zusammen 380 ml auf. Das erste Fluid 17 und das zweite Fluid 19 werden mit einer Durchflussmenge von 160 ml/min bzw. 80 ml/min der Mischkammer 5 zugeführt. Die Vermischung der beiden Fluide 17, 19 erfolgt bei einer Umdrehung des Rotors 13 von 3.600 U/min innerhalb eines Zeitraums von 95 Sekunden. Der Extraktionsgrad liegt nach bereits zwei Zentrifugenstufen bei ca. 96 bis 99 %. Als zu extrahierender Stoff können hierbei beispielsweise Kobalt oder Selten-Erden-Metalle vorgesehen sein.

Nach einem weiteren Beispiel der Erfindung kann die Zentrifuge 1 zum Extrahieren von Pflanzenschutzmitteln aus Pflanzenextrakten eingesetzt werden. Die Beschickung des ersten Fluids 17 und des zweiten Fluids 19 erfolgt bei einer Durchflussmenge von 156 ml/min bzw. 76 ml/min. Das Fassungsvermögen der Mischkammer 5 und der Zusatzmischkammer 8 beträgt 380 ml. Die beiden Fluide 17, 19 werden in der Mischkammer 5 bzw. der Zusatzmischkammer 8 in einem Zeitraum von 100 Sekunden bei einer Umdrehung des Rotors 13 von 3.900 U/min vermischt und anschließend im Rotor 13 getrennt. Der Extraktionsgrad bei einer zweistufigen Extrahierung liegt bei 98 bis 99,5 %.

Entsprechend einem weiteren Beispiel der Anwendung der Zentrifuge 1 kann diese zur Pestizidextraktion aus Pflanzenextrakten genutzt werden. Die Mischkammer 5 und die Zusatzmischkammer 8 weisen ein Fassungsvermögen von 165 l auf. Das erste Fluid 17 und das zweite Fluid 19 werden mit einer Durchflussmenge von 24 l/min bzw. 12 l/min der Mischkammer 5 zugeführt. In der Mischkammer 5 bzw. Zusatzmischkammer 8 werden die Fluide 17, 19 in einem Zeitraum von 275 Sekunden bei einer Umdrehung des Rotors 15 von 2.500 U/min gemischt und anschließend im Rotor 13 getrennt. Der Extraktionsgrad bei einer zweistufigen Extrahierung liegt zwischen 95 und 99,5 %.

Die Zentrifuge 1 kann alternativ auch lediglich zum Trennen von Fluiden dienen, wobei sie die Ausführung aufweisen kann, wie Sie in der EP 1 923 113 A1 mit einem entsprechenden Fluidkanal im Boden des Rotors 13 aufweist. Die EP 1 923 113 A1 wird daher als mitoffenbart angesehen.

Da die Zusatzmischkammer 8 über Befestigungsmittel mit dem feststehenden Gehäuse 2 verbunden ist, beispielsweise durch eine Schraubverbindung, können auf einfache Weise unterschiedlich große Zusatzmischkammern an das Gehäuse 2 angesetzt werden. Dies erfolgt wahlweise in Abhängigkeit von den aktuellen Prozessbedürfnissen des Anwenders. Das Volumen der Zusatzmischkammer 8 ist abhängig von der gewünschten Mischzeit. Je größer die benötigte Mischzeit ist, desto größer ist das Volumen der Zusatzmischkammer 8.

Nach einer nicht dargestellten alternativen Ausführungsform der Erfindung kann statt eines mitrotierenden Zuführkanals 22 auch ein feststehender Zuführkanal vorgesehen sein. Dieser feststehende Zuführkanal kann beispielsweise als ein Rohr ausgebildet sein, das fest mit dem Gehäuse der Trennkammer verbunden ist. Ein oberes Ende des rohrförmigen Zuführkanals dient als Eingang zu der Trennkammer. Ein der Trennkammer abgewandtes unteres Ende des rohrförmigen Zuführkanals dient als Einlass für das gemischte Fluid aus der Zusatzmischkammer 8. Das untere Ende des rohrförmigen Zuführkanals 22 ist vorzugsweise in einem Abstand zu einem Boden der Zusatzmischkammer 8 angeordnet.

Nach einer alternativen Ausführungsform der Erfindung kann statt des oberen und unteren Lagers 14, 14' der Rotor auch lediglich über zwei obere Lager drehbar gelagert sein. Die beiden oberen Lager befinden sich in vertikaler Richtung oberhalb der Trennkammer.

## Patentansprüche

1. Zentrifuge zum kombinierten Mischen und Trennen von Fluiden, mit einem Gehäuse (2), mit einem zylinderförmigen Rotor (13) innerhalb des Gehäuses (2), der in einem Abstand zu einer Wandung des Gehäuses (2) gelagert ist und in dem eine Trennkammer (6) mit Rotoreinbauten zum Trennen von Fluiden (17, 19) angeordnet ist, mit mindestens einem Einlass (18) für ein erstes Fluid (17), und für ein zweites Fluid (19), mit einem ersten Auslass (32) für ein leichtes getrenntes Fluid (30) und mit einem zweiten Auslass (33) für ein schweres getrenntes Fluid (31), wobei der erste Auslass (32) und der zweite Auslass (33) auf einer dem Eingang der Trennkammer (6) abgewandten Seite derselben angeordnet sind, dass zwischen der Wandung des Gehäuses (2) und dem Rotor (13) eine Mischkammer (5) angeordnet ist zum Mischen des ersten Fluids (17) und des zweiten Fluids (19) zu einem gemischten Fluid (25), dass die Trennkammer (6) einen Eingang zum Zuführen des gemischten Fluids (25) in axialer Richtung in dieselbe aufweist, **dadurch gekennzeichnet, dass** sich in axialer Richtung an die Mischkammer (5) eine Zusatzmischkammer (8) anschließt, deren Fassungsvermögen größer ist als das Fassungsvermögen der Mischkammer (5), und dass in axialer Verlängerung der Trennkammer (6) ein Zuführkanal (22) vorgesehen ist, der auf einer der Trennkammer (6) abgewandten Ende einen Einlass (24) für das gemischte Fluid (25) aufweist, so dass das gemischte Fluid (25) aus der Zusatzmischkammer (8) durch den Zuführkanal (22) zu dem Eingang der Trennkammer (6) leitbar ist und dass die Zusatzmischkammer (8) durch eine Wandung (21) eines unteren Gehäuseteils (2") des Gehäuses (2) und dem Zuführkanal (22) begrenzt ist, wobei der Zuführkanal (22) einen kleineren Radius (c₂) aufweist als ein Radius (c₁) des Rotors (13).

2. Zentrifuge nach Anspruch 1, **dadurch gekennzeichnet, dass** die Mischkammer (5) kreisringförmig um die Trennkammer (6) angeordnet ist mit einer Kammerbreite (b₁) zwischen der Wandung des Gehäuses (2') und dem Rotor (13), und dass die Zusatzmischkammer (8) in vertikaler Richtung unterhalb der Mischkammer (5) und der Trennkammer (6) verläuft.

3. Zentrifuge nach Anspruch 1 oder 2, **dadurch gekennzeichnet, dass** an die Mischkammer (5) wahlweise eine einzige Zusatzmischkammer (8) aus einer Mehrzahl von Zusatzmischkammern (8) unterschiedlicher axialer Länge (l₂) und unterschiedlicher radialer Breite (b2) derselben anschließbar sind..

4. Zentrifuge nach einem der Ansprüche 1 bis 3, **dadurch gekennzeichnet, dass** die Zusatzmischkammer (8) vorzugsweise über Befestigungsmittel lösbar mit dem Gehäuse (2) der Mischkammer (5) verbunden ist, so dass wahlweise Zusatzmischkammern (8) unterschiedlicher Volumina an das Gehäuse (2) ansetzbar sind.

5. Zentrifuge nach einem der Ansprüche 1 bis 4, **dadurch gekennzeichnet, dass** der Einlass (24) des Zuführkanals (22) axial versetzt zu dem Eingang der Trennkammer (6) ausgebildet ist, und dass der Zuführkanal (2) fest mit dem Rotor (13) verbunden ist.

6. Zentrifuge nach einem der Ansprüche 1 bis 4, **dadurch gekennzeichnet, dass** der Zuführkanal als ein Rohr ausgebildet ist, das fest mit dem Gehäuse der Mischkammer verbunden ist.

7. Zentrifuge nach einem der Ansprüche 1 bis 6, **dadurch gekennzeichnet, dass** das erste getrennte Fluid (30) und das zweite getrennte Fluid (31) druckfrei über den ersten Auslass (32) bzw. den zweiten Auslass (33) abführbar sind.

8. Zentrifuge nach einem der Ansprüche 1 bis 7, **dadurch gekennzeichnet, dass** eine Rotorwelle (12) des Rotors (13) antreibender Antrieb (9) auf einer ersten Stirnseite (10) und/oder einer zweiten Stirnseite (11) des Gehäuses (2) angeordnet ist.

9. Zentrifuge nach einem der Ansprüche 1 bis 8, **dadurch gekennzeichnet, dass** die Zusatzmischkammer (8) ein Fassungsvermögen im Beriech von 0,01 l bis 4000 l aufweist.

10. Zentrifuge nach einem der Ansprüche 1 bis 9, **dadurch gekennzeichnet, dass** der Rotor (13) über ein am oberen Ende des Rotors gelagerten oberen Lager und über ein am unteren Ende des Zuführkanals angeordneten unteren Lager oder über zwei am oberen Ende des Rotors angeordnete Lager gelagert ist.

11. Verfahren zum Mischen und Trennen von einem ersten Fluid (17) und einem zweiten Fluid (19) in einem Gehäuse (2), wobei die beiden Fluide (17, 19) in einer Mischkammer (5) und danach in einer Trennkammer (6) geleitet werden, **dadurch gekennzeichnet, dass** das erste Fluid (17) und das zweite Fluid (19) entsprechend einer Durchflussrate im Bereich von 0,01 l/min bis 700 l/min in die Mischkammer (5) eingebracht werden, dass das erste Fluid (17) und das zweite Fluid (19) in der Mischkammer (5) und einer sich an die Mischkammer (5) anschließenden Zusatzmischkammer (8) durch Rotation eines Rotors (13) im Bereich von 600 U/min bis 6.000 U/min für eine Zeit im Bereich von 5 Sekunden bis 1.000 Sekunden durchmischt werden zu einem gemischten Fluid (25), wobei die Zusatzmischkammer (8) durch eine Wandung (21) eines unteren Gehäuseteils (2') des Gehäuses (2) und einem Zuführkanal (22) begrenzt ist, dass das gemischte Fluid (25) in den Zuführkanal (22), der einen kleineren Radius (c2) aufweist als ein Radius (c1) des Rotors (13), eintritt und anschließend durch denselben in vertikaler Richtung nach oben in die Trennkammer (6) geleitet wird, in der ein leichtes getrenntes Fluid (30) und ein schweres getrenntes Fluid (31) aus dem gemischten Fluid (25) herausgetrennt werden und über einen ersten Auslass (32) bzw. einem zweiten Auslass (33) druckfrei abgegeben werden.

12. Verfahren nach Anspruch 11, **dadurch gekennzeichnet, dass** das erste Fluid (17) und das zweite Fluid (19) in mehreren Zentrifugen (1) nach einem der Ansprüche 1 bis 9 im Gegenstrom oder Kreuzstrom betrieben werden.

## Claims

1. A centrifuge for the combined mixing and separation of fluids, having a housing (2), having a cylindrical rotor (13) inside the housing (2), which rotor is mounted at a distance from a wall of the housing (2) and in which rotor a separating chamber (6) having rotor installations for separating fluids (17, 19) is arranged, having at least one inlet (18) for a first fluid (17) and for a second fluid (19), having a first outlet (32) for a light separated fluid (30) and having a second outlet (33) for a heavy separated fluid (31), wherein the first outlet (32) and the second outlet (33) are arranged on a side of the same which faces away from the entrance to the separating chamber (6), that a mixing chamber (5) for mixing the first fluid (17) and the second fluid (19) into a mixed fluid (25) is arranged between the wall of the housing (2) and the rotor (13), that the separating chamber (6) has an entrance for supplying the mixed fluid (25) into the same in an axial direction, **characterized in that** an additional mixing chamber (8) is connected in an axial direction to the mixing chamber (5), the capacity of which additional mixing chamber is greater than the capacity of the mixing chamber (5), and that a supply channel (22) is provided in an axial extension of the separating chamber (6), which supply channel has an inlet (24) for the mixed fluid (25) on an end facing away from the separating chamber (6), so that the mixed fluid (25) can be conducted from the additional mixing chamber (8) through the supply channel (22) to the entrance of the separating chamber (6) and that the additional mixing chamber (8) is delimited by a wall (21) of a lower part (2') of the housing (2) and the supply channel (22), wherein the supply channel (22) has a smaller radius (c₂) than a radius (c₁) of the rotor (13).

2. The centrifuge according to Claim 1, **characterized in that** the mixing chamber (5) is arranged in a circular form about the separating chamber (6) having a chamber width (b₁) between the wall of the housing (2') and the rotor (13), and that the additional mixing chamber (8) extends in a vertical direction beneath the mixing chamber (5) and the separating chamber (6).

3. The centrifuge according to Claim 1 or 2, **characterized in that** a single additional mixing chamber (8) from a plurality of additional mixing chambers (8) of different axial length (l₂) and different radial width (b₂) of the same can optionally be connected to the mixing chamber (5).

4. The centrifuge according to any one of Claims 1 to 3, **characterized in that** the additional mixing chamber (8) is preferably detachably connected by means of fastening means to the housing (2) of the mixing chamber (5), so that additional mixing chambers (8) of different volumes can optionally be positioned on the housing (2).

5. The centrifuge according to any one of Claims 1 to 4, **characterized in that** the inlet (24) of the supply channel (22) is configured axially offset to the entrance of the separating chamber (6) and that the supply channel (2) is fixed to the rotor (13).

6. The centrifuge according to any one of Claims 1 to 4, **characterized in that** the supply channel is configured as a pipe which is fixed to the housing of the mixing chamber.

7. The centrifuge according to any one of Claims 1 to 6, **characterized in that** the first separated fluid (30) and the second separated fluid (31) can be discharged in a pressure-free manner via the first outlet (32) and the second outlet (33) respectively.

8. The centrifuge according to any one of Claims 1 to 7, **characterized in that** a drive (9) driving a rotor shaft (12) of the rotor (13) is arranged on a first face (10) and/or a second face (11) of the housing (2).

9. The centrifuge according to any one of Claims 1 to 8, **characterized in that** the additional mixing chamber (8) has a capacity in the range of 0.01 I to 4000 l.

10. The centrifuge according to any one of Claims 1 to 9, **characterized in that** the rotor (13) is mounted by means of an upper bearing mounted at the upper end of the rotor and by means of a lower bearing arranged at the lower end of the supply channel or by means of two bearings arranged at the upper end of the rotor.

11. A method for mixing and separating a first fluid (17) and a second fluid (19) in a housing (2), wherein the two fluids (17, 19) are conducted in a mixing chamber (5) and then in a separating chamber (6), **characterized in that** the first fluid (17) and the second fluid (19) are introduced into the mixing chamber (5) in accordance with a flow rate in the range of 0.01 l/min to 700 l/min, that the first fluid (17) and the second fluid (19) are blended in the mixing chamber (5) and an additional mixing chamber (8) connected to the mixing chamber (5) by means of rotation of a rotor (13) in the range of 600 rpm to 6,000 rpm for a period in the range of 5 seconds to 1,000 seconds to form a mixed fluid (25), wherein the additional mixing chamber (8) is delimited by means of a wall (21) of a lower part (2') of the housing (2) and a supply channel (22), that the mixed fluid (25) enters the supply channel (22), which has a smaller radius (c2) than a radius (c1) of the rotor (13) and is subsequently conducted by means of the same upwards in a vertical direction into the separating chamber (6), in which a light separated fluid (30) and a heavy separated fluid (31) are separated from the mixed fluid (25) and are output in a pressure-free manner via a first outlet (32) and a second outlet (33) respectively.

12. The method according to Claim 11, **characterized in that** the first fluid (17) and the second fluid (19) are conducted in a counter-current or cross-current manner in multiple centrifuges (1) according to any one of Claims 1 to 9.

## Revendications

1. Centrifugeuse pour le mélange et la séparation combinés de fluides, avec un boîtier (2), avec, à l'intérieur du boîtier (2), un rotor (13) de forme cylindrique, qui est monté à une distance d'une paroi du boîtier (2), et dans lequel est aménagée une chambre de séparation (6), dotée d'inserts de rotor pour la séparation de fluides (17, 19), avec au moins une entrée (18) pour un premier fluide (17) et pour un deuxième fluide (19), avec une première sortie (32) pour un premier fluide séparé, léger (30) et avec une deuxième sortie (33) pour un deuxième fluide séparé, lourd (31), sachant que le première sortie (32) et la deuxième sortie (33) sont disposées sur un côté de la chambre de séparation (6), opposé à l'entrée de celle-ci, que, entre la paroi du boîtier (2) et le rotor (13), est aménagée une chambre de mélange (5) pour mélanger le premier fluide (17) et le deuxième fluide (19) en un fluide mélangé (25), que la chambre de séparation (6) présente une entrée pour amener dans celle-ci, dans la direction axiale, le fluide mélangé (25),
**caractérisée en ce que**, dans la direction axiale, se raccorde à la chambre de mélange (5) une chambre de mélange supplémentaire (8), dont la capacité est plus grande que la capacité de la chambre de mélange (5), et que, dans le prolongement axial de la chambre de séparation (6), est prévu un canal d'alimentation (22), qui, à une extrémité opposée à la chambre de séparation (6), présente une entrée (24) pour l'admission du fluide mélangé (25), de manière à ce que le fluide mélangé (25) puisse être conduit de la chambre de mélange supplémentaire (8) à l'entrée de la chambre de séparation (6) par l'intermédiaire du canal d'alimentation (22), et que la chambre de mélange supplémentaire (8) soit limitée par une paroi (21) d'une partie inférieure (2") du boîtier (2) et le canal d'alimentation (22), sachant que le canal d'alimentation (22) présente un rayon (c₂) qui est plus petit que le rayon (c₁) du rotor (13).

2. Centrifugeuse selon la revendication 1,
**caractérisée en ce que** la chambre de mélange (5) est disposée en forme d'anneau de cercle autour de la chambre de séparation (6), avec une largeur de chambre (b₁), entre la paroi du boîtier (2') et la rotor (13), et que la chambre de mélange supplémentaire (8) s'étend, dans la direction verticale, au-dessous de la chambre de mélange (5) et de la chambre de séparation (6).

3. Centrifugeuse selon revendication 1 ou 2,
**caractérisée en ce que**, à la chambre de mélange (5), une seule chambre de mélange supplémentaire (8) ou une pluralité de chambres de mélange supplémentaires (8) de longueur axiale (l₂) différente et de largeur radiale (b₂) différente peuvent être optionnellement raccordées à celle-ci.

4. Centrifugeuse selon l'une des revendications 1 à 3,
**caractérisée en ce que** la chambre de mélange supplémentaire (8) est, de préférence, reliée au boîtier (2) de la chambre de mélange (5) de manière amovible par l'intermédiaire de moyens de fixation, de manière à ce que des chambres de mélange supplémentaires (8) de différents volumes puissent être optionnellement raccordées au boîtier (2).

5. Centrifugeuse selon l'une des revendications 1 à 4,
**caractérisée en ce que** l'entrée (24) du canal d'alimentation (22) est décalée axialement vers l'entrée de la chambre de séparation (6) et que le canal d'alimentation (2) est relié fixement au rotor (13).

6. Centrifugeuse selon l'une des revendications 1 à 4,
**caractérisée en ce que** le canal d'alimentation est réalisé sous la forme d'un tube, qui est relié fixement au boîtier de la chambre de mélange.

7. Centrifugeuse selon l'une des revendications 1 à 6,
**caractérisée en ce que** le premier fluide séparé (30) et le deuxième fluide séparé (31) peuvent être évacués sans pression par la première sortie (32), respectivement par la deuxième sortie (33).

8. Centrifugeuse selon l'une des revendications 1 à 7,
**caractérisée en ce qu'**un entraînement (9), commandant l'arbre de rotor (12) du rotor (13), est disposé sur une première face frontale (10) et / ou une deuxième face frontale (11) du boîtier (2).

9. Centrifugeuse selon l'une des revendications 1 à 8,
**caractérisée en ce que** la chambre de mélange supplémentaire (8) présente une capacité située dans un domaine de 0,01 l à 4000 l.

10. Centrifugeuse selon l'une des revendications 1 à 9,
**caractérisée en ce que** le rotor (13) est monté par l'intermédiaire d'un support supérieur, disposé à l'extrémité supérieure du rotor et par l'intermédiaire d'un support inférieur, disposé à l'extrémité inférieure du rotor, ou par l'intermédiaire de deux supports, disposés à l'extrémité supérieure du rotor.

11. Procédé de mélange et de séparation d'un premier fluide (17) et d'un deuxième fluide (19) dans un boîtier (2), sachant que les deux fluides (17, 19) sont conduits dans une chambre de mélange (5) et ensuite dans une chambre de séparation (6),
**caractérisé en ce que** le premier fluide (17) et le deuxième fluide (19) sont amenés dans la chambre de mélange (5) selon un taux de passage situé dans une plage de 0,01 l/min à 700 l/min, que le premier fluide (17) et le deuxième fluide (19) sont mélangés en un fluide mélangé (25) dans la chambre de mélange (5) et dans une chambre de mélange supplémentaire (8), raccordée à la chambre de mélange (5), par rotation d'un rotor (13) dans une plage de 600 t/min à 6.000 t/min pendant une durée de temps située dans une plage de 5 secondes à 1.000 secondes, sachant que la chambre de mélange supplémentaire (8) est limitée par une paroi (21) d'une partie inférieure (2') du boîtier (2) et un canal d'alimentation (22), que le fluide mélangé (25) entre dans le canal d'alimentation (22), qui présente un rayon (c₂) qui est plus petit que le rayon (c₁) du rotor (13), et est ensuite conduit par celui-ci vers le haut, dans la direction verticale, dans la chambre de séparation (6), dans laquelle un premier fluide séparé, léger (30) et un deuxième fluide séparé, lourd (31) sont séparés à partir du fluide mélangé (25), et sont évacués sans pression par une première sortie (32), respectivement une deuxième sortie (33).

12. Procédé selon la revendication 11,
**caractérisé en ce que** le premier fluide (17) et le deuxième fluide (19) sont exploités en contre-courant ou en courant transversal dans plusieurs centrifuges selon les revendications 1 à 9.
